# EUROPÄISCHE PATENTSCHRIFT

(11) **EP 0 484 732 B1**
(45) Veröffentlichungstag und Bekanntmachung des Hinweises auf die Patenterteilung: **05.04.1995**
(21) Anmeldenummer: 91118012.3
(22) Anmeldetag: 23.10.1991
(51) Int. Cl.: H01J 1/30

(54) **Verfahren zum Betrieb einer Tunnelkathode.**
Controlling method of a tunnel cathode.
Procédé de commande d'une cathode à effet tunnel.

(30) Priorität: 30.10.1990 DE 4034487
(43) Veröffentlichungstag der Anmeldung: 13.05.1992
(73) Patentinhaber: Fimml, Hans, Dipl.-Ing., A-6020 Innsbruck (AT)
(72) Erfinder: Fimml, Hans, Dipl.-Ing., A-6020 Innsbruck (AT)
(74) Vertreter: Huss, Carl-Hans, Dipl.-Ing.

(56) Entgegenhaltungen:
- EP-A- 0 262 676
- EP-A- 0 351 263
- FR-A- 1 572 047
- US-A- 3 114 070

## Beschreibung

Die seit längerem bekannte und in zahlreichen Veröffentlichungen beschriebene Tunnelkathode besteht aus einem Grundmetall, einer darauf aufgebrachten Isolierschicht und einer auf der Isolierschicht befindlichen Deckschicht.

Wird zwischen Grund- und Deckschicht ein elektrisches Potential angelegt, so erfolgt bei richtiger Schichtdickenbemessung ein Emissionsstromaustritt aus der Deckschicht.

Obwohl sich diese Kathode durch besondere Einfachheit auszeichnet und gegenüber einer Bariumkathode erhebliche Vorteile aufweist, stehen ihrer Verwendbarkeit größere Schwierigkeiten entgegen. Um den Durchtritt der Elektronen durch Isolierschicht und Deckschicht zu ermöglichen, müssen diese Schichten extrem dünn hergestellt werden, und außerdem muß die Isolierschicht der hohen Feldkraft standhalten können.

In einer früheren Veröffentlichung hat K. M. Tischer einen erforderlichen Feldstärkenwert von etwa 5 x 10⁶ V/cm ermittelt. Andererseits wird in einer Untersuchung von "MEAD" eine Emission von etwa 10 A/cm² als erreichbar angegeben.

Nach den vorstehenden Ausführungen kann als das eigentliche Problem der Tunnelkathode die Notwendigkeit einer hohen Feldstärke angesehen werden.

Zur Bewältigung dieser Schwierigkeit wird erfindungsgemäß der Diodenstrom in kurze Stromimpulse umgewandelt. Hierzu wird in den Diodenstromkreis ein Unterbrecher mit ausreichend hoher Unterbrechungsfrequenz eingeschaltet. Als Unterbrecher eignen sich solche mit steilen Unterbrechungsflanken (Wehnelt-Unterbrecher), elektronische Schaltungen (Multivibrator, Schmitt Trigger u.a.). Da der Betrieb eines Wehnelt-Unterbrechers zu hohe Spannungs- und Stromwerte erfordert, wird in seinen Stromkreis ein Spannungsteiler geschaltet und diesem die für die Tunnelkathode noch erträgliche Spannung entnommen.

Ein auf diese Art durchgeführter Versuch ergab gegenüber einem in einer früher erschienenen Veröffentlichung bekanntgegebenen Wert eine Verbesserung um etwa das 40-fache.

Als Isolierschicht für eine Tunnelkathode wird allgemein eine Aluminiumoxydschicht angewendet, die zweckmäßig in der α-Al₂0₃-Modifikation eingesetzt wird, weil diese gegenüber anderen Modifikationen nicht hygroskopisch und nicht säureempfindlich ist.

## Patentansprüche

1. Verfahren zum Betrieb einer Tunnelkathode, bestehend aus einem metallischen Träger, einer Isolierschicht und einer metallischen Deckschicht, dadurch **gekennzeichnet,** daß der zwischen dem metallischen Träger und der metallischen Deckschicht fließende Diodenstrom mittels eines Unterbrechers oder eines elektronischen Zerhackers (Multivibrator, Schmitt Trigger u.a.) in kurzzeitige Impulse verwandelt wird.

## Claims

1. A process for operating a tunnel cathode, consisting of a metallic substrate, an insulating layer and a metallic covering layer, characterised in that the diode current flowing between the metallic substrate and the metallic covering layer is converted into pulses of short duration by means of a circuit breaker or an electronic chopper (*inter alia,* multivibrator, Schmitt trigger).

## Revendications

1. Procédé pour le fonctionnement d'une cathode à effet de tunnel, se composant d'un support métallique d'une couche isolante et d'une couche métallique de recouvrement, caractérisé en ce que le courant de diode s'écoulant entre le support métallique et la couche de recouvrement métallique est transformé au moyen d'un rupteur ou d'un hacheur (multi-vibrateurs, trigger Schmitt, entre autres) en impulsions de courte durée.
